(19) Europäisches Patentamt
European Patent Office
Office européen des brevets

(11) EP 3 502 658 A1

(12) EUROPEAN PATENT APPLICATION

(43) Date of publication:
26.06.2019 Bulletin 2019/26

(51) Int Cl.:
*G01N 15/06* (2006.01)

(21) Application number: 17210511.6

(22) Date of filing: 22.12.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Volumen d.o.o.**
**1000 Ljubljana (SI)**

(72) Inventors:
• **Drinovec, Luka**
  **1000 Ljubljana (SI)**
• **Mocnik, Grisa**
  **1000 Ljubljana (SI)**

(74) Representative: **Uexküll & Stolberg**
**Partnerschaft von**
**Patent- und Rechtsanwälten mbB**
**Beselerstraße 4**
**22607 Hamburg (DE)**

(54) **APPARATUS FOR DETERMINING PROPERTIES OF A SAMPLE STREAM**

(57)     An apparatus (1) for determining properties of a sample stream (2) carrying particles comprises a housing (3) having a housing inlet (4) and a housing outlet (5) through which the sample stream (2) enters and exits the housing (3). The apparatus (1) further comprises a particle filter (9b) with a first filter side (10) and an opposing second filter side (11). The particle filter (9b) is arranged in the housing (3) such that the sample stream (2) passes through the particle filter (9b) and the particles of the sample stream (2) are deposited on the first filter side (10). Moreover, the apparatus (1) comprises an optical source (12) for emitting a light beam (14) a first part of which forming a probe beam (14a) that reaches the particles deposited on the first filter side (10) thereby being partly absorbed and/or deflected. A first optical detector (15a) is arranged to detect a remaining part of the probe beam (14a) having passed the particles on the first filter side (10). A computing unit (19) is adapted to compute a concentration of the particles in the sample stream (2) and/or a light absorption coefficient of the particles in the sample stream (2) using an output signal (S) generated by the first optical detector (15a).

The optical source (12) is arranged such that it faces the second filter side (11) such that the probe beam (14a) reaches the second filter side (11) and the particles deposited on the first filter side (10) thereafter.

Fig. 1

EP 3 502 658 A1

**Description**

TECHNICAL FIELD

The present invention relates to an apparatus for determining properties of a gaseous sample stream carrying particles. Moreover, the present invention also relates to a method for determining properties of a gaseous sample stream carrying particles.

BACKGROUND OF THE INVENTION

Such an apparatus may be for example used to determine the concentration of particles in a sample stream such as a stream of a light-absorbing aerosol. Moreover, such an apparatus may be for example used to determine the light absorption coefficient of particles carried in a sample stream, e.g. the light-absorbing aerosol stream.

Most light-absorbing aerosols are produced during incomplete combustion of carbonaceous fuels for the production of energy. The most important of these are black carbon particles (BC particles) dispersed in air. Light absorption by BC particles is central to climate change, as elevated BC particles are the second man-made contributor (after $CO_2$) to global warming. Moreover, BC particles also affect public health as these particles are inhaled deeply and associated with lung and cardiovascular disease.

Moreover, some light-absorbing aerosols are also formed in the atmosphere from the gaseous organic precursors which are changed in the atmosphere and condense into particle phase.

In connection with the present invention the term "aerosol" has to be understood as a colloid of fine solid particles or liquid droplets dispersed in air or another gas. Regarding BC particles as mentioned above an aerosol comprises BC particles dispersed in air.

The most widely used measurements of light-absorbing aerosols in general and black carbon in particular, which are required in order to determine the above mentioned properties, are made employing filter absorption photometers, e.g. an Aethalometer. Filter absorption photometers are instruments which measure light transmission of (and sometimes reflection from) a sample laden filter. An aerosol such as air with particles dispersed therein is drawn through a filter, and the particles are deposited on a front filter surface. The front filter surface is illuminated using one or more optical sources and light having passed the particles on the front filter surface passes through the filter and is detected by a detector. Based on known algorithms the concentration of the particles in the sample streams and/or the light absorption coefficient of the particles in the sample stream is determined e.g. by a computing unit.

The measurement suffers from a well-known non-linearity, which was addressed for example in US 9,671,324. As the particles accumulate on the front filter surface, the decrease of the light transmission of the filter, which is quantified as the increase of attenuation (ATN) of light, is no longer linear to the amount of particles, in particular the mass density of particles, deposited on the front filter surface as the particles partly overlap. This means that the same increment of mass density of the particles on the front filter surface between two measurements correlates to a smaller amount of light being detected by the optical detector at higher ATN values than at lower ATN values.

Additionally, as the filter is more and more loaded with particles, which scatter and deviate the light rays being directed thereon, the scattering and deviating of the light beam changes. The filter amplifies the scattering, the deviation and in particular the changes thereof as the light beams having passed the particles propagate through the filter structure and are thus scattered and deviated again. This results in further deviation from the above described linear relationship.

To avoid these kinds of issues an algorithm and instrument measuring both reflectance and transmission was presented in US 7,038,765 and embodied in a Multiple Angle Absorption Photometer (MAAP). The particles are deposited on a filter facing an optical source similarly to the Aethalometer as described above. The part of the filter containing the particles is illuminated by the optical sources from above. The light transmission of the particle-laden filter is measured via an optical detector located underneath the filter. These measurements are augmented by measurements of reflectance at different angles above the filter taking advantage of the different behavior of the diffusely scattered and reflected light of the particle-laden filter. However, the instrument has been shown to also feature non-linear behavior when measuring high concentrations of black carbon.

It is an object of the present invention to provide an apparatus for determining properties of a sample stream carrying particles, wherein the apparatus allows improved optical measurements of properties of these particles.

SUMMARY OF THE INVENTION

This object is achieved by an apparatus comprising the features of claim 1 as well as by a method comprising the features of claim 10. Preferred embodiments are set out in the dependent claims.

According to the present invention the optical source is arranged such that it faces a second filter side located opposite to a first filter side. The optical source is arranged such that a probe beam which is formed by a first part of a light beam emitted from the optical source reaches the second filter side and passes the particle-laden filter before reaching the particles deposited on the first filter side. In other words, the probe beam reaches the second filter side at first and the particles deposited on the first filter side thereafter.

As the probe beam passes the filter prior to reaching the particles the scattering and deviation of the probe beam caused by the filter itself does not undergo any changes when the filter is increasingly loaded with the particles. Thus, the changes of the scattering and deviation of the probe beam caused by the particles as described above is no longer enhanced by the filter. This results in a more linear relationship between attenuation (ATN) of the probe beam and the mass density of particles deposited on the first filter surface and thus allows a more sensitive measurement of properties of the sample stream.

In connection with the present invention the term "sample stream" is to be understood as a stream of a light-absorbing aerosol. For example the sample stream may comprise black carbon particles as mentioned above dispersed in an air stream.

Further in connection with the present invention the term "light absorption coefficient" is to be understood as describing the reduction of intensity of light due to absorption of light by the particles in a volume of air. The particles absorb light and they are suspended in a volume of air. The "light absorption coefficient" is a property of the particles in the air or an air volume containing particles. The absorption coefficient has the unit 1/m. As according to the present invention air is sampled, this volume (now part of the sample stream) crosses the particle filter and the particles are deposited on the first filter side. It is thus assumed that the particles which have been collected on the filter (and have been suspended in the volume of air from which they were filtered) can have their absorption coefficient in the air determined from the measurement which is performed when they are collected on the filter. This assumption is expressed in the assumption that the absorption in the particle filter is enhanced by a factor C (see equation 4 on page 15).

Preferably, the first optical detector is located such that it faces the first filter side.

According to an embodiment of the present invention the apparatus further comprises a second optical detector which is arranged to detect a reference beam being formed by a second part of the light beam emitted by the optical source and being directed such that it bypasses the particle-laden filter. Preferably, the detection of the reference beam by the second optical detector provides a reference measurement which is not affected by the particles of the sample stream deposited on the first filter side.

In another embodiment of the present invention the computing unit is further adapted to compute the concentration of the particles in the sample stream and/or a light absorption coefficient of the particles in the sample stream using output signals generated by the first optical detector and the second optical detector in such a way that the output signals are set in relation to each other. Preferably the ratio of the output signals of the first optical detector and the second optical detector is used in order to determine the changed attenuation of the probe beam caused by the increasing amount of particles deposited on the first filter side relative to the reference beam bypassing the particle-laden filter.

In a preferred embodiment the apparatus comprises a pump which is adapted to draw the sample stream through the housing inlet and through the particle filter. Optionally the pump is located in the housing, preferably in proximity to the housing outlet. The pump is adapted to draw the sample stream from the housing inlet through the particle filter towards the housing outlet. Preferably, the sample stream streams through the housing separated from the path of the reference beam from the optical source towards the second detector.

According to one embodiment the apparatus comprises a flow meter adapted to measure the flow rate of the sample stream. Preferably the measurements of the flow meter are used by the computing unit in order to compute the concentration of the particles in the sample stream as well as to compute the absorption coefficient of the particles in the sample stream.

In another embodiment of the present invention the computing unit comprises a control unit which is adapted to control the pump based on the flow rate of the sample stream measured by the flow meter. Preferably, the control unit is adapted to control the flow rate of the sample stream through the housing in a closed loop manner in accordance with predefined values and/or within a predefined range of values. This allows for example the control of the flow rate of the sample stream such that the increase of particles deposited on the first filter side and thus the flow rate of the sample stream through the housing is constant.

Preferably, the computing unit comprises a storage unit for storing data generated by the first optical detector and the second optical detector and/or generated by the computing unit itself. Optionally, the data to be stored in the storage unit includes for example the output signals of the first optical detector and the second optical detector as well as data computed by the computing unit. Moreover, the values according to which the control unit controls the flow rate of the sample stream may also be stored in the storage unit.

In another embodiment of the present invention the housing comprises an optical chamber in which the first optical detector, the second optical detector and the particle filter are located. Preferably, the optical chamber is connected to the housing inlet as well as to the housing outlet such that the sample stream enters the optical chamber, passes through the particle filter and exits the optical chamber towards the housing outlet.

In a preferred embodiment the optical source comprises multiple light emitters wherein each the light emitters is adapted to emit a light beam, wherein the light beams have identical or different wavelengths. Using multiple light emitters, allows an uniform light distribution on the filter, higher light intensities, an easy and space saving arrangement of the light emitters in the housing.

The present invention also relates to a method for determining properties of a sample stream under use of an apparatus as described above.

According to an embodiment of the method according to the present invention the mass density of the particles on the first filter side and/or the light absorption coefficient of the particles on the first filter side are determined. Based on the determination of the mass density of the deposited particles the concentration of the particles in the sample stream may be determined.

In another embodiment of the method according to the present invention the step of determining the mass density of the particles and/or the step of determining the light absorption coefficient of the particles includes measuring the change of the remaining part of the probe beam which reaches the first optical detector. Preferably, the change of the remaining part of the probe beam which reaches the first optical detector is quantified as the change of attenuation of the probe beam. The change of the attenuation of the probe beam may be used to determine the mass density of the particles deposited on the first filter side.

In connection with the present invention the term "mass density" is to be understood as describing the density of the particles collected on the first filter side from the sample stream flowing through the particle filter in a predefined time period. "Mass density" includes the area of the first filter side and the mass of particles located thereon. Accordingly, when the amount of particles deposited on the first filter side increases, the mass density of the particles increases also.

Also preferred is an embodiment of the method according to the present invention in which the step of determining the mass density of the particles and/or the step of determining the light absorption coefficient of the particles includes measuring the change of the remaining part of the probe beam which reaches the first optical detector and measuring the reference beam which reaches the second optical detector, wherein the computing unit is adapted to set optical signals generated by the first optical detector and the second optical detector upon detection of the probe beam and the reference beam in relation to each other. Preferably the ratio of the output signals of the first optical detector and the second optical detector is used in order to determine the changed attenuation of the probe beam caused by the increasing amount of particles deposited on the first filter side relative to the reference beam bypassing the particle-laden filter.

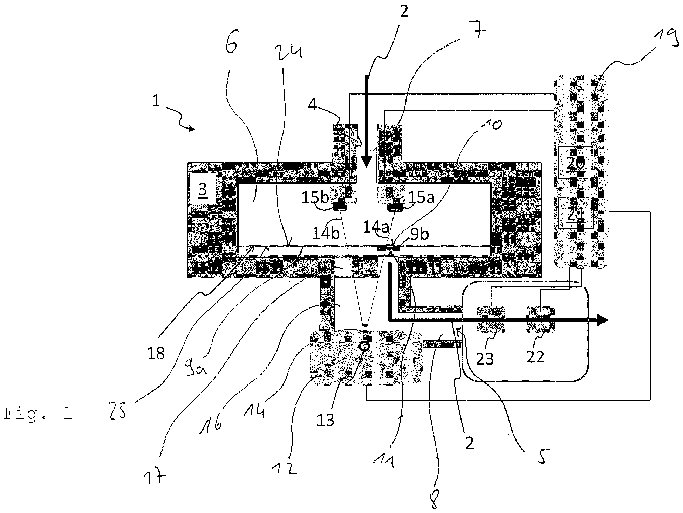

The invention will now be described in connection with an exemplary embodiment shown in Figure 1 which shows a schematic view of an apparatus according to the present invention.

Figure 1 shows an apparatus 1 for determining properties of a sample stream symbolized by arrows 2, wherein the sample stream 2 carries particles such as black carbon particles (not shown). In particular the apparatus 1 is adapted to determine a concentration of the particles in the sample stream 2 and/or a light absorption coefficient of the particles in the sample stream 2.

The apparatus 1 comprises a housing 3 having a housing inlet 4 and a housing outlet 5 through which the sample stream 2 enters and exits the housing 3. The housing 3 has an optical chamber 6 which is connected to the housing inlet 4 via an inlet duct 7 and which is connected to the housing outlet 5 via an outlet duct 8.

A filter 18 is located in the optical chamber 6 and comprises a first filter section 9a and a second filter section which forms a particle filter 9b The particle filter 9b has a first filter side 10 and an opposing second filter side 11. The particle filter 9b is arranged such that the sample stream 2 passes through the particle filter 9b and the particles of the sample stream 2 are deposited on the first filter side 10.

The particle filter 9b is enlarged in figure 1 for illustration purposes. However, it has to be understood that the particle filter 9b has the same properties as the first filter section 9a of the filter 18. Moreover, the first filter side 10 and the second filter side 11 of the particle filter 9b are arranged flush with an upper filter surface 24 and an opposing lower filter surface 25 of the first filter section 9a, respectively.

The apparatus 1 further comprises an optical source 12 having one or multiple light emitters 13. The light emitters 13 are adapted to emit light of one or more wavelengths. The wavelengths of each of the emitters may be identical or may differ from each other. According to the embodiment shown in figure 1 the apparatus 1 comprises one light emitter 13.

The light emitter 13 and thus the optical source 12 emits the light beam 14. The light beam 14 is directed by the optical source 12 such that its first part defining a probe beam 14a passes the second filter side 11 of the particle filter 9b such that the probe beam 14a reaches the second filter side 11 and the particles deposited on the first filter side 10 thereafter thereby being partly absorbed and/or deflected. A first optical detector 15a located in the optical chamber 6 is arranged to detect a remaining part of the probe beam 14a having passed the particles on the first filter side 10 of the particle filter 9b.

The apparatus 1 further comprises a second optical detector 15b which is arranged to detect a second part of the light beam 14 forming a reference beam 14b being directed such that it passes the first filter section 9a of the filter 18 where no sample is deposited. The reference beam 14b is thus directed such that it bypasses the particle filter 9b. The second optical detector 15b is also located in the optical chamber 6.

The housing comprises a bypass duct 16 in which a transparent optical window 17 is located. The light beam 14 is directed by the optical source 12 in such a way that the reference beam 14b is directed to the transparent optical window 17 and to the first filter section 9a of the filter 18 positioned in the optical chamber 6 thereafter.

The optical source 12 is arranged to face the first optical detector 15a and the second optical detector 15b such that upon having passed the optical window 17 and the filter 18 the reference beam 14b reaches the second optical detector 15b.

The filter 18 is configured to cover the bypass duct 16 as well as the outlet duct 8 such that also the sample stream 2 as well as the probe beam 14a are directed to pass through the filter 18.

The apparatus 1 further comprises a computing unit 19 adapted to compute a concentration of the particles in the sample stream 2 and/or a light absorption coefficient of the particles in the sample stream 2 using first and second output signals S, So generated by the first optical detector 15a and the second optical detector 15b in such a way that the output signals S, So are set in relation to each other. In particular the first optical detector 15a is configured to generate a first output signal S upon detection of the probe beam 14a whereas the second optical detector 15b is configured to generate a second output signal So upon detection of the reference beam 14b.

The computing unit 19 comprises a storage unit 20 for storing data such as the output signals S, So generated by the first optical detector 15a and the second optical detector 15b and/or generated by the computing unit 19.

Moreover, the computing unit 19 further comprises a control unit 21. The control unit 21 is adapted to control a pump 22 of the apparatus 1 based on a flow rate of the sample stream 2, which is measured by a flow meter 23. The pump 22 is located in or in proximity to the outlet duct 8 and is adapted to draw the sample stream 2 through the housing 3. In particular the pump 22 is adapted to draw the sample stream 2 through the housing inlet 4, through the particle filter 9b and subsequently through the outlet duct 8 such that the sample stream 2 exits the housing 3.

The flow meter 23 is also located in or in proximity to the outlet duct 8. The flow meter 23 is adapted to measure the flow rate of the sample stream 2 and transmits its data to the computing unit 19. Preferably the flow meter 23 is located in a streaming direction of the sample stream 2 before the pump 22.

In the following a method for determining properties of a sample stream 2 under use of the apparatus 1 as described above will be explained with reference to figure 1. In particular the method is adapted to determine the concentration of the particles in the sample stream 2 and/or the light absorption coefficient of the particles in the sample stream 2.

In a first step the sample stream 2 is drawn through the housing inlet 4, through the particle filter 9b in the optical chamber 6 and through the housing outlet 5 out of the housing 3 by use of the pump 22. The pump 22 is controlled by the control unit 21 in a closed loop manner based on the flow rate of the sample stream 2 measured by the flow meter 23. The pump 22 may be controlled such that it draws the sample stream 2 through the housing 3 in a continuously or intermittent manner. Upon streaming of the sample stream 2 through the particle filter 9b particles dispersed in the sample stream 2 are deposited on the first filter side 10 of the particle filter 9b.

In a second step a light beam 14 is emitted by a optical source 12 such that a first part thereof defining the probe beam 14a reaches the second filter side 11 of the particle filter 9b and the particles deposited on the first filter side 10 thereafter. Upon reaching the particles the probe beam 14a is partly absorbed and/or deflected. The remaining part of the probe beam 14a reaches the first optical detector 15a.

Simultaneously a second part of the light beam 14, defining the reference beam 14b bypasses the particle filter 9b. The reference beam 14b is directed through the bypass duct 16 in the optical chamber 6. After having passed through an optical window 17 and the first filter section 9a of the filter 18 the reference beam 14b reaches the second optical detector 15b.

The control unit 21 may be adapted to control the one or multiple emitters 13 in the optical source 12 such that the light beam 14 is emitted continuously or intermittently and by consequence the probe beam 14a and the reference beam 14b are continuous or intermittent.

In a third step the remaining part of the probe beam 14a having passed the particles on the first filter side 10 of the particle filter 9b is detected by a first optical detector 15a which generates a corresponding output signal S. The amount of light being detected by the first optical detector 15a is a measure for the transmission/transmittance T of the particle filter 9b. Simultaneously the reference beam 14b is detected by a second optical detector 15b which generates a corresponding output signal So.

In a fourth step the computing unit 19 computes the concentration of the particles in the sample stream 2 and/or the light absorption coefficient of the particles in the sample stream 2 using the output signals S, So generated by the first optical detector 15a and the second optical detector 15b in such a way that the output signals S, So are set in relation to each other.

In particular, the relationship between the probe beam 14a having passed the particle filter 9b and the reference beam 14b having bypassed the particle filter 9b is quantified as attenuation of light (ATN) based on the output signals S, So. As described above the output signals S, So are a measure for the transmission/transmittance T of the particle filter 9b and the transmittance To of a particle free filter 18 as the reference beam 14b bypasses the particle filter 9b. The ATN is calculated using the following formula:

$$ATN = 100 \ln(T_0/T) \qquad (1)$$

Changes in time ($\delta t$, which is the time between two subsequent measurements of each detector 15a, 15b) of the ATN are proportional to B, which is the mass density of the particles collected in this time on the particle filter 9b:

$$\delta ATN = \sigma_T \cdot B \qquad (2)$$

where $\delta ATN$ is the change of attenuation and the proportionality factor $\sigma_T$ is the specific mass attenuation cross-section.

By taking into account the assumed sample collection area A on the particle filter 9b and the measurement of the flow rate F of the sample stream 2, the mass concentration BC of the particles in the sample stream 2 at the time of the consecutive measurements by each of the first and second optical detectors 15a, 15b is then determined in combination with the equations (1) and (2) above:

$$BC = A / (\sigma_T \cdot F) \cdot \delta ATN / \delta t \qquad (3)$$

Additionally, the absorption coefficient $b_{abs}$ of the particles in the sample stream 2 may be determined using the same measurements of the first and second optical detectors 15a, 15b and an assumed filter absorption enhancement factor C which includes further scattering by the filter 18:

$$b_{abs} = A / (C \cdot F) \cdot \delta ATN / \delta t \qquad (4)$$

The general method of determining the concentration of particles in a sample stream and the light absorption coefficient of particles in a sample stream are for example known for example from "Real-time measurement of the absorption coefficient of aerosol particles", Hansen et al., Applied Optics, Vol. 21, page 3060, September 1, 1982 and US 4,893,934 which are herewith incorporated by reference in their entirety.

Moreover, the apparatus 1 as described above may also be adapted to additionally detect light of the probe beam 14a and reference beam 14b being reflected by the particle filter 9b and/or the particles deposited thereon. The reflection (REF) and the change of reflection ($\delta REF$) are determined according to the following formulas:

$$REF = 100 \ \ln(R_0/R). \qquad (5)$$

$$\delta REF = 2 \cdot \sigma_R \cdot B \qquad (6)$$

wherein R is the reflectance of the probe beam 14a through/from the particle filter 9b and $R_0$ is the reflectance of the reference beam 14b through/from a sample free particle filter 18 as the reference beam 14b bypasses the particle filter 9b. The proportionality factor $\sigma_R$ is the specific mass reflection cross-sections and includes the amplifying absorption and scattering properties of the particle filter 9b. Regarding the apparatus 1 reflection may be measured by additional detectors (not shown) positioned next to the optical source 12.

## Reference numerals

| | |
|---|---|
| 1 | apparatus |
| 2 | sample stream (arrows) |
| 3 | housing |
| 4 | housing inlet |
| 5 | housing outlet |
| 6 | optical chamber |
| 7 | inlet duct |
| 8 | outlet duct |
| 9 | a/b first/second filter section |
| 10 | first filter side |
| 11 | second filter side |
| 12 | optical source |
| 13 | emitter |
| 14 | light beam |
| 14 | a/b probe/reference beam |
| 15 | a/b first/second optical detector |
| 16 | reference duct |
| 17 | optical window |
| 18 | filter |
| 19 | computing unit |
| 20 | storage unit |
| 21 | control unit |
| 22 | pump |
| 23 | flow meter |
| 24 | upper filter side (first filter part) |
| 25 | lower filter side (first filter part) |

## Claims

1. An apparatus for determining properties of a sample stream carrying particles, the apparatus comprising:

   a housing (3) having a housing inlet (4) and a housing outlet (5) through which the sample stream (2) enters and exits the housing (3), a particle filter (9b) with a first filter side (10) and an opposing second filter side (11), wherein the particle filter (9b) is arranged in the housing (3) such that the sample stream (2) passes through the particle filter (9b) and the particles of the sample stream (2) are deposited on the first filter side (10), an optical source (12) for emitting a light beam (14) a first part of which forming a probe beam (14a) that reaches the particles deposited on the first filter side (10) thereby being partly absorbed and/or deflected,

a first optical detector (15a) arranged to detect a remaining part of the probe beam (14a) having passed the particles on the first filter side (10) and

a computing unit (19) adapted to compute a concentration of the particles in the sample stream (2) and/or a light absorption coefficient of the particles in the sample stream (2) using an output signal (S) generated by the first optical detector (15a),

**characterized in that**

the optical source (12) is arranged such that it faces the second filter side (11) such that the probe beam (14a) reaches the second filter side (11) and passes the particle filter (9b) before reaching the particles deposited on the first filter (10) side.

2. Apparatus according to claim 1, **characterized in that** the apparatus (1) further comprises a second optical detector (15b) which is arranged to detect a reference bam (14b) being formed by a second part of the light beam (14) emitted by the optical source (12) and being directed such that it bypasses the particle filter (9b).

3. Apparatus according to claim 2, **characterized in that** the computing unit (19) is further adapted to compute the concentration of the particles in the sample stream (2) and/or an light absorption coefficient of the particles in the sample stream (2) using output signals $(S, S_0)$ generated by the first optical detector (15a) and the second optical detector (15b) in such a way that the output signals $(S, S_0)$ are set in relation to each other.

4. Apparatus according to any of the preceding claims, **characterized in that** the apparatus (1) comprises a pump (22) which is adapted to draw the sample stream (2) through the housing inlet (4) and through the particle filter (9b).

5. Apparatus according to any of the preceding claims, **characterized in that** the apparatus (1) comprises a flow meter (23) adapted to measure the flow rate of the sample stream (2).

6. Apparatus according to claims 4 and 5, **characterized in that** the computing unit (19) comprises a control unit (21) which is adapted to control the pump (22) based on the flow rate of the sample stream (2) measured by the flow meter (23).

7. Apparatus according to any of the preceding claims, **characterized in that** the computing unit (19) comprises a storage unit (20) for storing data generated by the first optical detector (15a) and the second optical detector (15b) and/or generated by the computing unit (19).

8. Apparatus according to any of the preceding claims, **characterized in that** the housing (3) comprises an optical chamber (6) in which the first detector (15a), the second optical detector (15b) and the particle filter (9b) are located.

9. Apparatus according to any of the preceding claims, **characterized in that** the optical source (12) comprises multiple light emitters (13) wherein each of the light emitters (13) is adapted to emit a light beam (14), wherein the light beams have a single equal wavelength or multiple different wavelengths.

10. A method for determining properties of a sample stream (2) carrying particles under use of an apparatus (1) according to any of the claims 1 to 9.

11. Method according to claim 10 **characterized by** the step of determining the mass density of the particles on the first filter side (10) and/or by the step of determining the light absorption coefficient of the particles on the first filter side (10).

12. Method according to claim 11 **characterized in that** the step of determining the mass density of the particles and/or the step of determining the light absorption coefficient of the particles includes measuring the change of the remaining part of the probe beam (14a) which reaches the first optical detector (15a).

13. Method according to claim 11 **characterized in that** the step of determining the mass density of the particles and/or the step of determining the light absorption coefficient of the particles includes measuring the change of the remaining part of the probe beam (14a) which reaches the first optical detector (15a) and measuring the reference beam 14b) which reaches the second optical detector (15b), wherein the computing unit (19) is adapted to set output signals $(S, S_0)$ generated by the first optical detector (15a) and the second optical detector (15b) upon detection of the probe beam (14a) and the reference beam (14b) in relation to each other.

Fig. 1

**Europäisches Patentamt**
**European Patent Office**
**Office européen des brevets**

# EUROPEAN SEARCH REPORT

Application Number

EP 17 21 0511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 4 893 934 A (HANSEN ANTHONY D [US]) 16 January 1990 (1990-01-16) * figure 1 * ----- | 1-13 | INV. G01N15/06 |
| Y | CHIN-I LIN ET AL: "Absorption Coefficient of Atmospheric Aerosol: a Method for Measurement", APPLIED OPTICS, vol. 12, no. 6, 1 June 1973 (1973-06-01), page 1356, XP055464577, WASHINGTON, DC; US ISSN: 0003-6935, DOI: 10.1364/AO.12.001356 * page 1357, column 1, line 35 - page 1358, column 2, line 24; figure 1 * ----- | 1-13 | |
| A,D | US 7 038 765 B2 (ESM ANDERSEN INSTR GMBH [DE]) 2 May 2006 (2006-05-02) * figure 1 * ----- | 1-13 | |
| A,D | US 9 671 324 B2 (AEROSOL D O O [SI]) 6 June 2017 (2017-06-06) * paragraph [0040] - paragraph [0041] * ----- | 1-13 | TECHNICAL FIELDS SEARCHED (IPC) G01N |

The present search report has been drawn up for all claims

| Place of search | Date of completion of the search | Examiner |
|---|---|---|
| Munich | 5 April 2018 | Thomte, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 21 0511

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2018

| Patent document cited in search report | | Publication date | Patent family member(s) | | Publication date |
|---|---|---|---|---|---|
| US 4893934 | A | 16-01-1990 | NONE | | |
| US 7038765 | B2 | 02-05-2006 | DE | 10240204 B3 | 08-01-2004 |
| | | | JP | 3899057 B2 | 28-03-2007 |
| | | | JP | 2004085569 A | 18-03-2004 |
| | | | US | 2004156036 A1 | 12-08-2004 |
| US 9671324 | B2 | 06-06-2017 | EP | 2937680 A1 | 28-10-2015 |
| | | | US | 2016313229 A1 | 27-10-2016 |
| | | | US | 2018017478 A1 | 18-01-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9671324 B
- US 7038765 B
- US 4893934 A

**Non-patent literature cited in the description**

- **HANSEN et al.** Real-time measurement of the absorption coefficient of aerosol particles. *Applied Optics,* 01 September 1982, vol. 21, 3060